# FASCICULE DE BREVET EUROPEEN

(11) **EP 2 819 845 B1**
(45) Date de publication et mention de la délivrance du brevet: **04.05.2016**
(21) Numéro de dépôt: 13707139.5
(22) Date de dépôt: 21.02.2013
(51) Int. Cl.: B32B 25/08, B60C 9/18

(54) **STRATIFIE MULTICOUCHE UTILISABLE POUR LE RENFORCEMENT D'UNE CEINTURE DE PNEUMATIQUE**
MEHRSCHICHTGEBILDE FÜR DIE VERSTÄRKUNG EINES REIFENGURTES
LAMINATE FOR THE REINFORCEMENT OF A TYRE BELT

(30) Priorité: 29.02.2012 FR 1251845
(43) Date de publication de la demande: 07.01.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HUYGHE, Jean-Michel, F-63040 Clermont-Ferrand Cedex 9 (FR); LE CLERC, Christophe, F-63040 Clermont-Ferrand Cedex 9 (FR); RIOU, Aline, F-63040 Clermont-Ferrand Cedex 9 (FR); THUILLIEZ, Anne-Lise, F-63040 Clermont-Ferrand Cedex 9 (FR)
(74) Mandataire: Ribière, Joel
(86) Numéro de dépôt international: PCT/EP2013/053445
(87) Numéro de publication internationale: WO 2013/127685

(56) Documents cités:
- EP-A1- 0 414 892
- WO-A1-2005/113887
- WO-A1-2010/115861
- FR-A1- 2 930 194

## Description

### 1. DOMAINE DE L'INVENTION

La présente invention est relative aux stratifiés multicouches, utilisables notamment comme éléments de renforcement d'articles finis ou produits semi-finis en caoutchouc, tels que par exemple des pneumatiques à armature de carcasse radiale.

Elle se rapporte plus particulièrement à l'utilisation de tels stratifiés dans le sommet de tels pneumatiques, notamment comme couches de protection contre les agressions ou perforations.

### 2. ETAT DE LA TECHNIQUE

De manière connue, un pneumatique à armature de carcasse radiale comporte une bande de roulement, deux bourrelets inextensibles, deux flancs souples reliant les bourrelets à la bande de roulement et une armature de sommet rigide ou "ceinture" disposée circonférentiellement entre l'armature de carcasse et la bande de roulement.

La ceinture de pneumatique est généralement constituée de nappes en caoutchouc superposées pouvant comporter des fils de renforcement, métalliques ou textiles, disposés généralement parallèlement les uns aux autres à l'intérieur d'une nappe donnée.

En particulier, cette ceinture peut comporter une ou plusieurs nappes sommet dites "de protection", situées en général sous la bande de roulement et chargées de protéger le reste de la ceinture des agressions externes, déchirures ou autres perforations. C'est par exemple le cas général dans les ceintures des pneumatiques pour véhicules Poids-lourd ou Génie civil.

Ces nappes de protection doivent être suffisamment souples et déformables pour, d'une part, épouser au mieux la forme de l'obstacle sur lequel la ceinture appuie lors du roulage, et, d'autre part s'opposer à la pénétration de corps étrangers radialement à l'intérieur de celle-ci. La satisfaction de tels critères exige l'utilisation dans ces couches de protection de fils de renforcement sous forme de câbles présentant une haute élasticité ainsi qu'une énergie à la rupture élevée.

On utilise habituellement des câbles d'acier dits "à torons" (*"strand cords"*), qualifiés aussi de câbles haute élongation (câbles "HE"), qui sont assemblés par la technique connue de toronnage et constitués d'une pluralité de torons métalliques retordus ensemble en hélice, chaque toron comportant plusieurs fils d'acier également enroulés ensemble en hélice. De tels câbles élastiques à torons ont été décrits dans un grand nombre brevets ou demandes de brevet, en particulier pour renforcer des nappes sommet de protection de pneumatiques pour véhicules industriels tels que Poids-lourd ou Génie civil (voir par exemple US 5843583, US 6475636, WO 2004/003287 (ou US 2005/0183808), WO 2004/033789 ou US 7089726, WO 2005/014925 ou US 2006/0179813).

Toutefois, ces nappes de protection sommet renforcées de câbles métalliques à torons présentent un certain nombre d'inconvénients. Tout d'abord, ces câbles à torons sont relativement coûteux, ceci à double titre : d'une part, ils sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes. D'autres inconvénients connus de ces câbles métalliques sont leur sensibilité à la corrosion, leur poids et leur encombrement (diamètre externe) relativement important.

La demande WO 2010/115861 a récemment proposé un stratifié multicouche nouveau, léger et performant, qui permet notamment de remplacer les nappes conventionnelles renforcées de câbles d'acier et donc de pallier les inconvénients précités.

Ce stratifié multicouche constitué par un film de polymère étiré multiaxialement, disposé entre deux couches de composition de caoutchouc, possède une structure souple et hautement déformable qui s'est révélée, de manière inattendue, présenter une résistance élevée aux efforts de perforation, équivalente à celle des tissus de protection conventionnels renforcés de câbles métalliques, malgré une épaisseur nettement inférieure.

Ce stratifié multicouche s'est montré par ailleurs particulièrement performant dans des ceintures de pneumatiques pour véhicule tourisme qui se sont révélées capables, malgré une structure très simplifiée, de développer une poussée de dérive équivalente à celle observée avec des ceintures conventionnelles comportant deux nappes de travail croisées métalliques.

Grâce à sa faible épaisseur, ce stratifié multicouche présente en outre l'avantage notable d'être faiblement hystérétique comparativement aux tissus conventionnels caoutchoutés à base de câbles métalliques, nettement plus épais, ce qui est bien entendu propice à la diminution de la résistance au roulement des pneumatiques.

### 3. BREVE DESCRIPTION DE L'INVENTION

Poursuivant leurs recherches sur ce stratifié multicouche, les Demanderesses ont constaté, de manière inattendue, que la résistance au roulement des pneumatiques décrits dans la demande WO 2010/115861 précitée, pouvait être encore diminuée grâce à un perfectionnement touchant à la structure même du stratifié.

Ainsi, selon un premier objet, la présente invention concerne un stratifié multicouche comportant au moins un film de polymère ayant, quelle que soit la direction de traction considérée dans le plan du film, un module d'Young noté E qui est supérieur à 500 MPa, ledit film étant disposé entre et au contact de deux couches de composition de caoutchouc, caractérisé en ce que chaque couche de composition de caoutchouc présente un module sécant en extension à 10% d'allongement, noté Ms, qui est supérieur à 30 MPa.

L'invention concerne également l'utilisation d'un tel stratifié comme élément de renforcement de produits semi-finis en caoutchouc ou d'articles finis en caoutchouc tels que des pneumatiques, ainsi que ces produits semi-finis, articles finis et pneumatiques eux-mêmes.

Les pneumatiques de l'invention, en particulier, peuvent être destinés à des véhicules à moteur du type tourisme, 4x4, "SUV" (*Sport Utility Vehicles*), mais également à des véhicules deux-roues tels que motos ou vélos, ou à des véhicules industriels choisis parmi camionnettes, "Poids-lourd" c'est-à-dire métro, bus, engins de transport routier (camions, tracteurs, remorques), véhicules hors-la-route tels qu'engins agricoles ou de Génie civil, avions, autres véhicules de transport ou de manutention.

Bien entendu, l'invention concerne le stratifié ci-dessus à l'état cru (avant réticulation du caoutchouc) comme à l'état cuit (après réticulation, vulcanisation du caoutchouc).

Le stratifié multicouche de l'invention est tout particulièrement utilisable dans des ceintures de pneumatiques destinés notamment aux véhicules décrits ci-dessus.

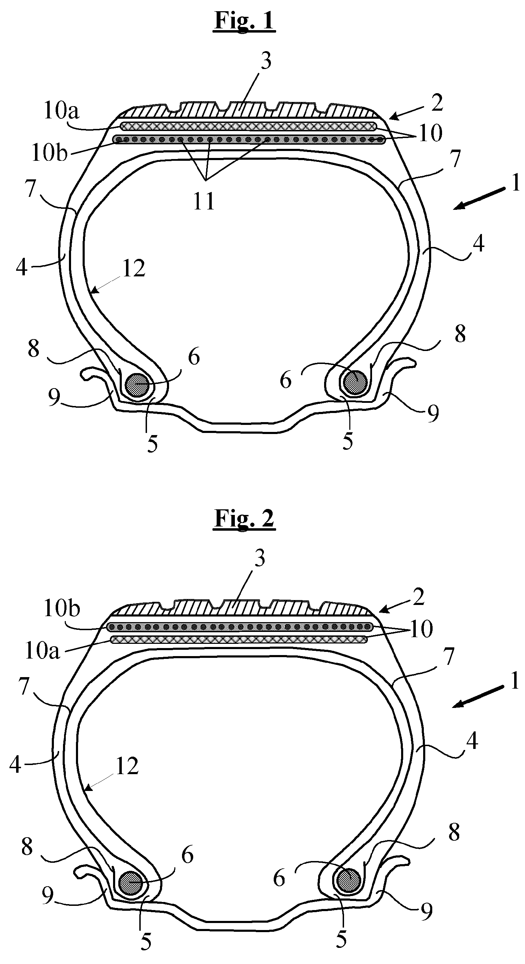

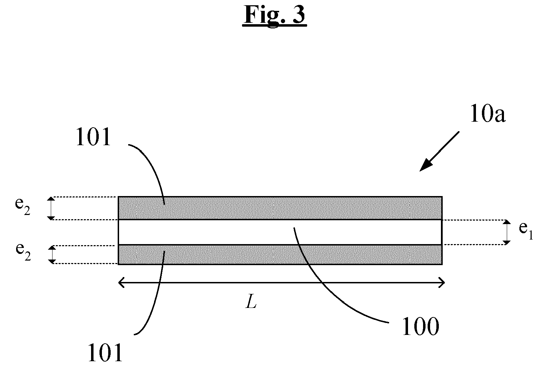

L'invention ainsi que ses avantages seront aisément compris à la lumière de la description détaillée et des exemples de réalisation qui suivent, ainsi que des figures 1 à 3 relatives à ces exemples qui schématisent (sauf indication contraire, sans respect d'une échelle spécifique) :
- en coupe radiale, deux exemples de pneu conforme à l'invention, incorporant un stratifié multicouche selon l'invention (Fig. 1 et Fig. 2) ;
- en coupe transversale, un stratifié multicouche conforme à l'invention (Fig. 3).

### 4. DEFINITIONS

Dans la présente demande, on entend par :
- "caoutchouc" ou "élastomère" (les deux termes étant considérés comme synonymes) : tout type d'élastomère (diénique ou non diénique) ;
- "caoutchouc diénique" : tout élastomère (élastomère seul ou mélange d'élastomères) qui est issu, au moins en partie (soit un homopolymère, soit un copolymère), de monomères diènes c'est-à-dire de monomères porteurs de deux doubles liaisons carbone-carbone, que ces dernières soient conjuguées ou non ;
- "couche" : une bande ou tout autre élément tridimensionnel d'épaisseur relativement faible par rapport à ses autres dimensions, dont le rapport de l'épaisseur sur la plus grande des autres dimensions est inférieur à 0,5, de préférence inférieur à 0,1 ;
- "feuille" ou "film" toute couche fine, dont le rapport de l'épaisseur sur la plus petite des autres dimensions est inférieur à 0,1 ;
- "fil de renforcement" ("*reinforcing thread*") : tout brin long et fin, tout filament élémentaire, toute fibre multifilamentaire ou tout assemblage de tels filaments ou fibres tels que des retors ou des câbles, de grande longueur relativement à sa section transversale, susceptible de renforcer les propriétés en extension d'une matrice de caoutchouc, ce fil pouvant être rectiligne comme non rectiligne, par exemple torsadé, ou ondulé ;
- stratifié" ou "stratifié multicouche" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### 5. DESCRIPTION DETAILLEE DE L'INVENTION

Le stratifié multicouche de l'invention a donc pour caractéristique essentielle de comporter au moins un film de polymère disposé entre et au contact de deux couches de composition de caoutchouc à haut module, film et couches qui vont être décrits en détail ci-après.

Tout film de polymère ayant, quelle que soit la direction de traction considérée dans le plan du film, un module d'Young (pour rappel, module initial en extension) noté E qui est supérieur à 500 MPa, est utilisable.

De préférence, le film utilisé présente, quelle que soit la direction de traction considérée (bien entendu, dans le plan du film), un module en extension noté E qui est supérieur à 1000 MPa (notamment entre 1000 et 4000 MPa), plus préférentiellement encore supérieur à 2000 MPa. Des valeurs de module E comprises entre 2000 et 4000 MPa sont particulièrement souhaitables, notamment pour le renforcement de pneumatiques.

Selon un autre mode préférentiel, quelle que soit la direction de traction considérée, la contrainte maximale en traction notée σₘₐₓ du film est supérieure à 80 MPa (notamment entre 800 et 200 MPa), plus préférentiellement supérieure à 100 MPa (notamment entre 100 et 200 MPa). Des valeurs de contrainte σₘₐₓ supérieures à 150 MPa, en particulier comprises entre 150 et 200 MPa, sont particulièrement souhaitables, notamment pour le renforcement de pneumatiques.

Selon un autre mode préférentiel, quelle que soit la direction de traction considérée, le seuil de déformation plastique noté Yp (connu aussi sous le terme anglais de "*Yield point*") du film est situé au-delà de 3% d'allongement, notamment entre 3 et 15%. Des valeurs Yp au-delà de 4%, en particulier comprises entre 4 et 12%, sont particulièrement souhaitables, notamment pour le renforcement de pneumatiques.

Les propriétés mécaniques énoncées ci-dessus sont bien connues de l'homme du métier, déduites des courbes force-allongement, mesurées par exemple selon la norme ASTM F638-02 pour des bandes d'épaisseur supérieure à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film de polymère peut être du type thermoplastique, comme du type non thermoplastique par exemple en aramide ou en cellulose.

On utilise de préférence des films de polymère thermoplastique, plus préférentiellement des films de polymère thermoplastique étirés multiaxialement, c'est-à-dire étirés, orientés dans plus d'une direction, tels qu'ils ont été décrits dans la demande WO 2010/115861 précitée.

De tels films étirés multiaxialement sont bien connus, ils ont été utilisés essentiellement à ce jour dans l'industrie de l'emballage (*"packaging"*), de l'alimentaire, dans le domaine électrique ou encore en tant que support de revêtements magnétiques. Ils sont préparés selon diverses techniques d'étirage bien connues, toutes destinées à conférer au film des propriétés mécaniques élevées dans plusieurs directions principales et non dans une seule direction comme c'est le cas pour des fibres usuelles en polymère thermoplastique (par exemple PET ou "Nylon") qui sont de manière connue étirées monoaxialement lors de leur filage au fondu. De telles techniques font appel à des étirages multiples dans plusieurs directions, étirages longitudinaux, transversaux, étirages planaires. A titre d'exemple, on peut notamment citer la technique de bi-étirage par soufflage. Les étirages peuvent être réalisés en une ou plusieurs fois, les étirages lorsqu'ils sont plusieurs pouvant être simultanés ou séquencés. Le ou les taux d'étirage appliqués sont fonction des propriétés mécaniques finales visées, généralement supérieurs à 2.

Des films de polymère thermoplastique étirés multiaxialement ainsi que leur procédés d'obtention ont été décrits dans de nombreux documents brevets, par exemple dans les documents FR 2539349 (ou GB 2134442), DE 3621205, EP 229346 (ou US 4876137), EP 279611 (ou US 4867937), EP 539302 (ou US 5409657) et WO 2005/011978 (ou US 2007/0031691).

Lorsque le film utilisé est un film de polymère thermoplastique, ce dernier présente préférentiellement, quelle que soit la direction de traction considérée dans le plan du film, un allongement à la rupture noté Ar qui est supérieur à 20% (notamment entre 20% et 200%), plus préférentiellement supérieur à 50% (notamment entre 50% et 200%).

Le film de polymère thermoplastique utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film de polymère thermoplastique utilisé présente, après 30 min à 150°C, une contraction relative de sa longueur qui est inférieure à 5%, de préférence inférieure à 3% (mesurée selon ASTM D1204).

La température de fusion du polymère thermoplastique utilisé est préférentiellement choisie supérieure à 100°C, plus préférentiellement supérieure à 150°C, en particulier supérieure à 200°C notamment dans le cas de renforcement de pneumatiques.

Le polymère thermoplastique est choisi préférentiellement dans le groupe constitué par les polyamides, les polyesters et les polyimides, plus particulièrement dans le groupe constitué par les polyamides et les polyesters. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Le polymère thermoplastique est préférentiellement un polyester, plus préférentiellement un PET ou PEN.

Des exemples de films de polymère thermoplastique PET ou PEN étirés multiaxialement, convenant au stratifié multicouche de l'invention, sont par exemple les films de PET bi-étirés commercialisés sous les dénominations "Mylar" et "Melinex" (société DuPont Teijin Films), ou encore "Hostaphan" (société Mitsubishi Polyester Film), ou les films de PEN bi-étirés commercialisés sous la dénomination "Teonex" (société DuPont de Nemours).

Dans le stratifié multicouche de l'invention, l'épaisseur e₁ du film de polymère est de préférence comprise entre 0,05 et 1 mm, plus préférentiellement entre 0,1 et 0,7 mm. Par exemple, des épaisseurs de film de 0,20 à 0,60 mm se sont révélées tout à fait convenir pour une utilisation en ceinture de pneumatique.

Le film de polymère peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple être utilisées pour rendre la surface du film rugueuse et contribuer ainsi à améliorer sa prise de colle et/ou son adhésion aux couches de caoutchouc avec lesquelles il est destiné à être au contact.

Chaque couche de composition de caoutchouc, ou ci-après "couche de caoutchouc", constitutive du stratifié multicouche de l'invention est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant le stratifié multicouche de l'invention).

Elle a pour caractéristique essentielle d'être à très haute rigidité, c'est-à-dire de présenter un module sécant en extension particulièrement élevé : à 10% d'allongement, le module Ms de chaque composition de caoutchouc est par définition supérieur à 30 MPa, de préférence compris entre 30 et 150 MPa.

On peut noter dès maintenant qu'un tel domaine de rigidité et module est tout à fait inhabituel pour une composition de caoutchouc destinée à être utilisée en ceinture de pneumatique, le domaine usuel pour l'homme du métier étant plutôt compris entre 5 et 20 MPa, comme enseigné dans de très nombreux brevets ou demandes de brevet (voir par exemple EP 722 977 ou US 6 169 137, WO 02/053827 ou US 6 766 841, WO 02/053828 ou US 6 962 182, WO 2004/003287 ou US 7 594 380, WO 2005/113666 ou US 2008/0026244, WO 2004/033548 ou US 2004/0129360), en particulier dans la demande WO 2010/115861 précitée.

De préférence, le caoutchouc est un caoutchouc diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce (parties en poids pour cent parties d'élastomère) de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, des résines plastifiantes à haute Tg (température de transition vitreuse) supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus tels que acide stéarique, oxyde de zinc, dérivés guanidiques, des retardateurs ou des agents antiréversion.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC"), 1-phényl-2,4-dithiobiuret ("DTB"), dibutylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIPX") et les mélanges de ces composés.

Parmi les retardateurs de vulcanisation, on citera par exemple le N-cyclohexylthiophtalimide (en abrégé « CTP ») commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m²/g, de préférence de 30 à 400 m²/g.

L'homme de l'art saura, à la lumière de la présente description, ajuster la formulation de la composition de caoutchouc afin d'atteindre les niveaux de propriétés (notamment module Ms) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

Des compositions de caoutchouc à très haut module utilisables dans le cadre de la présente invention, jusqu'ici normalement réservées à des zones des pneumatiques plus rigides que celles de la ceinture, en particulier aux bourrelets de ces pneumatiques, ont par exemple été décrites dans les documents brevet WO 2005/113259 (ou US 8 033 311) et WO 2005/113887 (ou US 2008/0318077), ainsi que leur formulations détaillées.

Le soufre est utilisé à un taux préférentiel compris entre 2 et 15 pce, plus préférentiellement entre 3 et 12 pce. L'accélérateur primaire de vulcanisation, par exemple un sulfénamide, est utilisé à un taux préférentiel compris entre 0,5 et 10 pce. Le retardateur de vulcanisation, s'il est présent, est utilisé à un taux préférentiel compris entre 0,1 et 2 pce.

Le taux de charge renforçante, par exemple noir de carbone et/ou charge inorganique telle que silice, est de préférence supérieur à 50 pce, par exemple compris entre 60 et 140 pce ; il est plus préférentiellement encore supérieur à 70 pce, notamment compris entre 70 et 120 pce.

Dans les cas des plus fortes rigidités, la composition de caoutchouc pourra avantageusement comporter également une résine renforçante additionnelle constituée par exemple d'un accepteur de méthylène tel qu'une résine formophénolique, à un taux préférentiel compris entre 5 et 30 pce, plus préférentiellement entre 10 et 25 pce, et un donneur de méthylène tel que HMT ou H3M, à un taux préférentiel compris entre 2 et 20 pce, plus préférentiellement entre 5 et 15 pce.

Selon un autre mode de réalisation préférentiel, chaque couche de composition de caoutchouc comporte plus de 5 pce, de préférence entre 5 et 30 pce, d'un agent plastifiant, préférentiellement sous forme liquide à température ambiante (20°C), destiné à améliorer la processabilité (mise en oeuvre) des compositions de caoutchouc à l'état cru.

A titre d'exemples, toute huile d'extension, qu'elle soit de nature aromatique ou non-aromatique, tout agent plastifiant connu pour ses propriétés plastifiantes vis-à-vis d'élastomères diéniques, est utilisable.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*Distillate Aromatic Extracts*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés.

Selon un autre mode de réalisation préférentiel, chaque couche de composition de caoutchouc comporte plus de 3 pce, de préférence entre 3 et 15 pce, d'une résine tackifiante (pour rappel, une résine apte à donner du "tack" c'est-à-dire un collant immédiat par légère pression sur un support), destinée à améliorer le collant à l'état cru des compositions de caoutchouc et le processus de calandrage lors de la fabrication du stratifié multicouche de l'invention.

De manière bien connue de l'homme du métier, la dénomination "résine" est réservée à un composé qui est d'une part solide à température ambiante (23°C) (par opposition à un composé plastifiant liquide tel qu'une huile), d'autre part compatible (c'est-à-dire miscible au taux utilisé) avec la composition d'élastomère à laquelle il est destiné.

Ces résines tackifiantes sont des polymères bien connus de l'homme du métier, elles peuvent être aliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titres d'exemples de telles résines tackifiantes, on peut notamment citer celles choisies dans le groupe constitué par les colophanes et leurs dérivés, les résines coumarone, les résines phénoliques, les résines terpéniques (alpha-pinène, beta-pinène, ou limonène), les résines terpène-phénol, les résines de coupe C5 et/ou coupe C9, les résines de cyclopentadiène et/ou dicyclopentadiène, les résines alpha-méthyl-styrène et les mélanges de telles résines.

Selon un mode de réalisation préférentiel de l'invention, la résine tackifiante utilisée présente au moins une quelconque, plus préférentiellement l'ensemble des caractéristiques suivantes :
- une Tg supérieure à 25°C, en particulier comprise entre 30°C et 100°C (mesurée par DSC selon norme ASTM D3418) ;
- un point de ramollissement supérieur à 50°C, en particulier compris entre 50°C et 150°C (mesuré par exemple selon la norme ISO 4625 - méthode «Ring and Ball ») ;
- une masse moléculaire moyenne en nombre (Mn) comprise entre 400 et 2000 g/mol, en particulier entre 500 et 1500 g/mol (mesurée par exemple par SEC (chromatographie d'exclusion stérique) avec étalons de polystyrène).

Préférentiellement, le module Ms de chaque composition de caoutchouc est supérieur à 40 MPa, notamment compris entre 40 et 120 MPa ; plus préférentiellement encore, il est supérieur à 50 MPa, notamment compris entre 50 et 100 MPa.

Les mesures de module Ms sont effectuées en traction, sauf indication différente selon la norme ASTM D 412 de 1998 (éprouvette "C") (bien entendu, sur une éprouvette de composition de caoutchouc à l'état réticulé, c'est-à-dire cuit, vulcanisé, pour ce qui concerne les compositions préférentielles du type réticulables) : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le stratifié multicouche de l'invention, l'épaisseur e₂ de chaque couche de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un pneumatique.

De préférence, notamment lors d'une utilisation du stratifié multicouche comme structure de protection ou renforcement d'une ceinture de pneumatique, le stratifié multicouche de l'invention présente une largeur et une longueur qui sont respectivement supérieures à 2,5 mm et à 10 cm, plus préférentiellement respectivement supérieures à 5 mm et à 20 cm.

Le film de polymère peut être utilisé tel quel, c'est-à-dire tel que disponible commercialement, ou bien redécoupé à façon sous forme de bandes ou bandelettes étroites dont la largeur peut varier dans une très large mesure selon les applications visées.

Selon un mode de réalisation préférentiel, dans le stratifié multicouche de l'invention, le film de polymère est pourvu d'une couche adhésive au regard de chaque couche de composition de caoutchouc avec laquelle il est au contact. Bien entendu, l'invention s'applique également aux cas où aucune couche adhésive n'est utilisée, le film de polymère lui-même et/ou chaque couche de composition de caoutchouc pouvant posséder une propriété auto-adhésive due à sa ou leur formulation propre.

Pour faire adhérer le caoutchouc au film de polymère, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester, en polyamide ou en aramide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 220°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle du film lors de son encollage.

L'homme du métier comprendra aisément que, dans le stratifié multicouche de l'invention, la connexion entre le film de polymère et chaque couche de caoutchouc avec laquelle il est au contact pourra être assurée définitivement lors de la cuisson (réticulation) finale de l'article fini en caoutchouc, notamment du pneumatique.

### 6. EXEMPLES DE REALISATION DE L'INVENTION

Le stratifié multicouche de l'invention est utilisable comme élément de renforcement dans tout type d'article fini ou produit semi-fini en caoutchouc, notamment dans des pneumatiques destinés à tous types de véhicules, en particulier à des véhicules tourisme ou des véhicules industriels tels que camionnettes, Poids-lourd, Génie civil, avions, autres véhicules de transport ou de manutention.

A titre d'exemple, la figure 1 annexée représente de manière très schématique, sans respect d'une échelle spécifique, une coupe radiale d'un pneumatique conforme à l'invention.

Ce pneumatique 1 comporte un sommet 2 surmonté d'une bande de roulement 3, deux flancs 4 et deux bourrelets 5, chacun de ces bourrelets 5 étant renforcé avec une tringle 6. Une armature de carcasse 7 est enroulée autour des deux tringles 6 dans chaque bourrelet 4, le retournement 8 de cette armature 7 étant par exemple disposé vers l'extérieur du pneumatique 1 qui est ici représenté monté sur sa jante 9. Le sommet 2 est ici renforcé par une armature de sommet ou ceinture 10 constituée d'au moins deux structures renforçantes distinctes (10a, 10b).

Ce pneumatique 1 a pour caractéristique nouvelle et essentielle que sa ceinture 10 (ou son sommet 2, ce qui revient au même) comporte au moins un stratifié multicouche 10a conforme à l'invention, disposé radialement entre la bande de roulement 3 et l'armature de carcasse 7, ledit stratifié multicouche 10a étant constitué lui-même du film de polymère précédemment décrit disposé entre les deux couches de caoutchouc à très haute rigidité avec lesquelles il est au contact.

Dans ce pneumatique 1 illustré à la figure 1, on comprendra que la bande de roulement 3, le stratifié multicouche de l'invention 10a, la structure de renforcement sommet 10b et l'armature de carcasse 7 peuvent être ou non au contact les uns des autres, même si ces parties ont été volontairement séparées sur la figure 1, schématique, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Sur la figure 1 illustrant un premier mode de réalisation préférentiel de l'invention, on voit que le stratifié multicouche 10a de l'invention constitue, au sein de la ceinture 10, une structure ou écran de protection du sommet, située sous la bande de roulement et chargée de protéger le reste de la ceinture, en l'occurrence dans cet exemple la structure de renforcement sommet 10b, contre des agressions externes, déchirures ou autres perforations pouvant intervenir lors du roulage du pneumatique.

Avantageusement, le stratifié multicouche de l'invention a également pour fonction de constituer un écran, une barrière à l'eau et à l'oxygène, autant d'éléments corrosifs vis-à-vis de câbles métalliques présents dans le reste du pneumatique, notamment dans la ceinture elle-même ou dans son armature de carcasse.

La figure 2 annexée illustre un autre mode possible de réalisation de l'invention dans lequel le stratifié multicouche 10a de l'invention constitue, au sein de cette même ceinture 10, une structure ou écran de protection du sommet située cette fois sous la structure de renforcement sommet 10b et chargée de protéger le reste du pneumatique, en l'occurrence dans cet exemple son armature de carcasse 7.

Selon un autre mode de réalisation possible, deux structures de protection (stratifiés multicouches de l'invention) 10a du sommet pourraient être également disposées de part et d'autre, radialement, de la structure de renforcement sommet 10b.

Dans les représentations ci-dessus des figures 1 et 2, l'armature de carcasse 7 est de manière connue en soi constituée d'au moins une nappe de caoutchouc renforcée par des fils de renforcement dits "radiaux", par exemple textiles ou métalliques, c'est-à-dire que ces fils de renforcement sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 10).

Ces fils de renforcement radiaux sont par exemple en acier, en polyester, nylon, aramide, cellulose, polycétone, ou encore du type hybrides ou composites c'est-à-dire constitués d'un mélange des matières précitées comme par exemple des câbles hybrides aramide-nylon.

La structure de renforcement sommet 10b de la ceinture 10 est par exemple constituée, de manière connue en soi, par au moins une nappe de caoutchouc renforcée par des fils de renforcement 11 dits "circonférentiels", par exemple textiles ou métalliques, c'est-à-dire que ces fils de renforcement sont disposés pratiquement parallèles les uns aux autres et s'étendent sensiblement circonférentiellement autour du pneumatique de manière à former un angle préférentiellement compris dans un domaine de 0 à 10° avec le plan circonférentiel médian. Ces fils de renforcement circonférentiels 11 ont pour fonction première, on le rappelle, de résister à la centrifugation du sommet à haute vitesse.

Comme exemples de fils de renforcement circonférentiels 11, sont par exemple utilisables des câbles en acier au carbone ou en acier inoxydable, des câbles textiles constitués de fibres retordues entre elles, en particulier et préférentiellement des câbles connus pour leur stabilité dimensionnelle relativement à la température et/ou l'humidité. Les fibres textiles de ces câbles sont par exemple choisies dans le groupe constitué par les fibres d'alcool polyvinylique, de polyamide aromatique (ou "aramide"), de polyamide aliphatique (ou nylon), de polyester (par exemple PET ou PEN), de polyester aromatique, de cellulose (par exemple rayonne, viscose), de polyphénylène benzobisoxazole, de polycétone, les fibres de verre, de carbone, les fibres céramiques. A titre particulièrement préférentiel, on citera notamment des fils de renforcement en acier au carbone, aramide, polyester, nylon, cellulose, polycétone, ainsi que des fils de renforcement hybrides constitués de ces différents matériaux tels que des câbles aramide/nylon. Les fils de renforcement 11 peuvent être disposés dans la ceinture en une seule voire en plusieurs couches superposées radialement, selon notamment leur module en extension, leur densité dans le caoutchouc, et plus généralement l'architecture particulière considérée du pneumatique et de sa ceinture.

Les fils de renforcement radiaux ou circonférentiels ci-dessus peuvent prendre toute forme connue, il peut d'agir par exemple de mono filaments élémentaires de diamètre important (par exemple et de préférence égal ou supérieur à 50 µm), de fibres multifilamentaires (constituées d'une pluralité de filaments élémentaires de faible diamètre, typiquement inférieur à 30 µm), de retors textiles formés de plusieurs fibres retordues ensemble, de câbles textiles ou métalliques formés de plusieurs fibres ou monofilaments câblés ou retordus ensemble.

La structure de renforcement 10b de la ceinture 10 pourrait également comporter, de manière bien connue de l'homme du métier, au moins deux nappes dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au pneumatique une rigidité de dérive élevée.

La figure 3 schématise de manière très simple un exemple de stratifié multicouche conforme à l'invention (10a). Dans ce stratifié de l'invention, la largeur "*L*" du film (100) est de préférence identique à la largeur des deux couches de caoutchouc (101) entre lesquelles il est disposé. Mais l'invention s'applique bien entendu aux cas où cette largeur *L* est différente, inférieure ou supérieure ; par exemple, le film de polymère, dans ce stratifié multicouche conforme à l'invention, pourrait être constitué d'une pluralité de bandes ou bandelettes plus étroites, juxtaposées ou non, et orientées selon une direction principale identique ou différente de celle des deux couches de caoutchouc.

On utilise à titre d'exemple un film (100) de PET bi-étiré ("Mylar A" de la société DuPont Teijin Films, d'épaisseur e₁ égale à environ 0,5 mm), du type polymère thermoplastique étiré multiaxialement qui présente, quelle que soit la direction de traction considérée dans le plan du film, les propriétés mécaniques suivantes :
- un module en extension E supérieur à 500 MPa ;
- une contrainte maximale en traction σₘₐₓ supérieure à 100 MPa ;
- un seuil de déformation plastique Yp compris entre 5 et 10% ;
- un allongement à la rupture Ar supérieur à 20%.

De telles propriétés se déduisent aisément des courbes de traction telles qu'elles ont été par exemple reproduites dans la demande précitée WO 2010/115861. On rappellera ici brièvement que les courbes notées C1, C2 et C3 reproduites à la figure 3 de la demande précitée, correspondent à une traction conduite, respectivement, selon l'orientation principale du film correspondant à la direction d'extrusion (connue aussi sous le nom de direction "MD" pour *"Machine Direction"*), selon une orientation normale à la direction MD (connue sous le nom de direction "TD" pour "*Transversale Direction"*), et enfin selon une direction oblique (angle de 45°) par rapport aux deux directions précédentes (MD et TD). De ces courbes de traction peuvent être déduites, de manière bien connue de l'homme du métier, comme indiqué sur cette figure 3, les propriétés mécaniques telles que module en extension (E), contrainte maximale en traction (σₘₐₓ), seuil de déformation plastique Yp (ou "*Yield point*") et allongement à la rupture (Ar).

Ces courbes de traction sont enregistrées et les propriétés mécaniques mesurées, sauf indication expresse différente, selon la norme ASTM D882-09, sur des éprouvettes de films sous forme d'haltères de 4 mm de large et 30 mm de long (partie utile tractionnée), et d'épaisseur e₁ égale à celle du film de polymère testé, tractionnées à une vitesse de 200 mm/min.

Le stratifié multicouche 10a schématisé à la figure 3 (préparé de manière conventionnelle par calandrage) est donc, dans cet exemple, constitué du film 100 de PET bi-étiré, disposé "en sandwich" entre deux couches 101 de composition de caoutchouc d'épaisseur e₂ par exemple égale à environ 0,4 mm, le stratifié ayant donc une épaisseur totale (e₁+2e₂) par exemple d'environ 1,3 mm.

La composition de caoutchouc ici utilisée est une composition de haute rigidité (module Ms égal à environ 55 MPa) typiquement du type pour bourrelets (5) de pneumatique, à base de caoutchouc naturel, de noir de carbone (environ 75 pce), de résine renforçante (environ 20 pce de résine phénolique associés à environ 8 pce de H3M et HMT), d'antioxydant, d'un système de vulcanisation à fort taux de soufre (environ 5 pce) et des additifs usuels de vulcanisation ; elle comporte en outre environ 10 pce d'huile paraffinique et 8 pce de résine tackifiante (résine butyl-phénol-acétylène). L'adhésion entre le film de PET et chaque couche de caoutchouc est assurée par une colle du type RFL qui a été déposée de manière connue, comme indiqué précédemment.

Des tests laboratoire de perforation, comme déjà décrits dans la demande WO 2010/115861 précitée, ont été tout d'abord conduits sur le stratifié multicouche ci-dessus.

Ils ont démontré que le stratifié de l'invention, comparativement au stratifié de l'art antérieur comportant des couches de caoutchouc à module (Ms) conventionnel (soit environ 10 MPa), présentait une résistance à la perforation au moins équivalente, c'est-à-dire excellente pour les deux types de stratifiés au regard de leur épaisseur nettement réduite comparativement à celle de tissus conventionnels métalliques.

Puis, des tests de roulage de pneus pour véhicule tourisme (dimensions 205/55 R16) ont été conduits sur machines de roulage automatiques, à la fois sur des pneus de l'invention et des pneus témoins (selon WO 2010/115861), dans lesquels ont été caractérisées la poussée de dérive, l'endurance sous très forte dérive ainsi que la résistance au roulement.

Dans ces tests, la ceinture (10) du pneumatique (1) était simplement constituée du stratifié multicouche tel que décrit ci-dessus (10a) et d'une structure de renforcement (10b) (fils de renforcement circonférentiels 11 en aramide (retors constitués de 2 brins de 167 tex retordus ensemble à 315 t/m), telle que schématisée à la figure 2. Le film de PET bi-étiré se présentait ici sous forme de bandelettes, lames parallèles de largeur 25 mm environ, d'une part disposées côte à côte dans un même plan entre les deux couches de caoutchouc à haut module, mais séparées les unes des autres par une distance (pas) d'environ 2 mm, et d'autre part inclinées de 40° par rapport au plan circonférentiel médian, comme décrit dans la demande WO 2010/115861 précitée.

Les pneus témoins (selon WO 2010/115861) et les pneus de la présente invention avaient la même architecture, exception faite du module (et donc de la formulation) des deux couches de caoutchouc entourant les lames de film de PET bi-étiré : composition usuelle (Ms égal à 8 MPa) pour calandrage de ceinture dans le cas des pneus témoins, composition décrite ci-dessus (Ms égal à environ 55 MPa) pour les pneus de l'invention.

La résistance au roulement a été mesurée sur un volant, selon la méthode ISO 87-67 (1992).

Pour la mesure de la poussée de dérive, chaque pneumatique a été monté sur une roue de dimension adaptée et gonflé à 2,4 bars. On le fait rouler à une vitesse constante de 80 km/h sur une machine automatique appropriée (machine type "sol-plan" commercialisée par la société MTS). On fait varier la charge notée "Z", sous un angle de dérive de 1 degré, et on mesure de manière connue la rigidité ou poussée de dérive notée "D" (corrigée de la poussée à dérive nulle), en enregistrant à l'aide de capteurs l'effort transversal sur la roue en fonction de cette charge Z ; la poussée de dérive est la pente à l'origine de la courbe D(Z).

Enfin, l'endurance sous très forte dérive a été testée de manière connue, selon différents cycles prédéterminés de pression et de surcharge, à vitesse constante et sous différents angles de forte dérive (plus précisément ici, selon méthode « MICH2MF » décrite dans la publication « *Michelin Indoor Characterization for Handling applied to Mathematical Formule »,* Jérémy Buisson, Aachener Kolloquium Fahrzeug- und Motorentechnik, 2006) ; après quoi, l'état des fonds de sculpture de la bande de roulement de chaque pneu testé a été examiné afin d'identifier et le cas échéant dénombrer d'éventuelles cassures ou fissurations pouvant être dues à une séparation, migration des lames de PET dans la zone sommet du pneu sous les conditions de roulage extrêmement sévères de ce type de test.

A l'issue de l'ensemble des essais ci-dessus, on a constaté que les pneus de l'invention, comparés aux pneus témoins, présentaient :
- une poussée de dérive sensiblement augmentée (environ + 15%), synonyme d'un comportement routier amélioré pour les pneus de l'invention ;
- une amélioration d'endurance sous très forte dérive, avec des amorces de fissurations en quantité notablement réduite et nettement moins prononcées ;
- une réduction notable (-3% soit un gain d'environ 250 g par tonne) de résistance au roulement, ce qui est tout à fait significatif pour l'homme du métier.

L'homme du métier des pneumatiques s'attendait, en utilisant dans la ceinture des couches de composition de caoutchouc à plus haute rigidité, à pénaliser l'hystérèse et donc à augmenter la résistance au roulement du pneumatique. De manière surprenante, il n'en est rien.

En conclusion, l'utilisation du stratifié multicouche spécifique de l'invention dans une ceinture de pneumatique permet donc de réduire la résistance au roulement sans pénaliser, voire même en améliorant les autres propriétés de roulage du pneumatique, notamment celles de poussée de dérive et d'endurance sous très forte dérive.

L'invention permet en outre la construction de pneumatiques dont la structure du sommet peut être avantageusement simplifiée, la ceinture du pneumatique pouvant consister simplement en un stratifié multicouche selon l'invention associé à des fils de renforcement circonférentiels, notamment en aramide, noyés dans au moins une (c'est-à-dire une ou plusieurs) couche de caoutchouc.

## Revendications

1. Stratifié multicouche, utilisable notamment comme élément de renforcement d'un pneumatique, comportant au moins un film de polymère ayant, quelle que soit la direction de traction considérée dans le plan du film, un module d'Young noté E qui est supérieur à 500 MPa, ledit film étant disposé entre et au contact de deux couches de composition de caoutchouc, **caractérisé en ce que** chaque couche de composition de caoutchouc présente, à l'état réticulé, un module sécant en extension à 10% d'allongement, noté Ms, qui est supérieur à 30 MPa.

2. Stratifié multicouche selon la revendication 1, dans lequel le caoutchouc est un caoutchouc diénique, de préférence choisi dans le groupe constitué par les polybutadiènes, le caoutchouc naturel, les polyisoprènes de synthèse, les copolymères de butadiène, les copolymères d'isoprène, et les mélanges de ces élastomères.

3. Stratifié multicouche selon la revendication 2, dans lequel chaque couche de composition de caoutchouc comporte 50 à 100 pce de caoutchouc naturel.

4. Stratifié multicouche selon l'une quelconque des revendications 1 à 3, dans lequel chaque couche de composition de caoutchouc comporte plus de 5 pce, de préférence entre 5 et 30 pce, d'un agent plastifiant.

5. Stratifié multicouche selon l'une quelconque des revendications 1 à 5, dans lequel chaque couche de composition de caoutchouc comporte une résine tackifiante, de préférence à un taux supérieur à 3 pce.

6. Stratifié multicouche selon l'une quelconque des revendications 1 à 5, dans lequel le module sécant Ms de chaque couche de composition de caoutchouc est compris entre 30 et 150 MPa.

7. Stratifié multicouche selon l'une quelconque des revendications 1 à 6, dans lequel le module sécant Ms de chaque couche de composition de caoutchouc est supérieur à 40 MPa, de préférence compris entre 40 et 120 MPa.

8. Stratifié multicouche selon l'une quelconque des revendications 1 à 7, dans lequel le film de polymère présente, quelle que soit la direction de traction considérée dans le plan du film, un module d'Young E qui est supérieur à 1000 MPa, de préférence supérieur à 2000 MPa.

9. Stratifié multicouche selon l'une quelconque des revendications 1 à 8, dans lequel le film de polymère présente, quelle que soit la direction de traction considérée dans le plan du film, un contrainte maximale en traction notée σₘₐₓ qui est supérieure à 80 MPa, de préférence supérieure à 100 MPa.

10. Stratifié multicouche selon l'une quelconque des revendications 1 à 9, dans lequel le polymère du film est un polymère thermoplastique.

11. Stratifié multicouche selon la revendication 10, dans lequel le film de polymère thermoplastique présente, après 30 min à 150°C, une contraction relative de longueur qui est inférieure à 5%.

12. Stratifié multicouche selon l'une quelconque des revendications 1 à 11, dans lequel le polymère thermoplastique est un polyester ou un polyamide, de préférence un polyester.

13. Stratifié multicouche selon la revendication 12, dans lequel le polyester est un polyéthylène téréphthalate ou un polyéthylène naphthalate.

14. Pneumatique comportant un stratifié multicouche selon l'une quelconque des revendications 1 à 13, de préférence le stratifié multicouche renforçant la ceinture du pneumatique.

15. Pneumatique selon la revendication 14, la ceinture du pneumatique consistant en un stratifié multicouche selon l'une quelconque des revendications 1 à 14, associé à des fils de renforcement circonférentiels noyés dans au moins une couche de caoutchouc.

## Patentansprüche

1. Mehrschichtlaminat, insbesondere verwendbar als Verstärkungselement eines Reifens, das mindestens eine Polymerfolie aufweist, die unabhängig von der in der Folienebene betrachteten Zugrichtung einen mit E bezeichneten Elastizitätsmodul von über 500 MPa aufweist, wobei die Folie zwischen zwei Schichten aus einer Kautschukzusammensetzung angeordnet ist und sie berührt, **dadurch gekennzeichnet, dass** jede Schicht aus einer Kautschukzusammensetzung im vernetzten Zustand ein mit Ms bezeichnetes Dehnungssekantenmodul bei 10% Dehnung von über 30 MPa aufweist.

2. Mehrschichtlaminat nach Anspruch 1, wobei der Kautschuk ein Dien-Kautschuk ist, der vorzugsweise aus der Gruppe ausgewählt ist, die aus Polybutadienen, Naturkautschuk, synthetischen Polyisoprenen, Butadien-Copolymeren, Isopren-Copolymeren und Mischungen aus diesen Elastomeren besteht.

3. Mehrschichtlaminat nach Anspruch 2, wobei jede Schicht aus einer Kautschukzusammensetzung 50 bis 100 phr Naturkautschuk umfasst.

4. Mehrschichtlaminat nach einem der Ansprüche 1 bis 3, wobei jede Schicht aus einer Kautschukzusammensetzung mehr als 5 phr, vorzugsweise zwischen 5 und 30 phr, eines Weichmachers umfasst.

5. Mehrschichtlaminat nach einem der Ansprüche 1 bis 5, wobei jede Schicht aus einer Kautschukzusammensetzung ein klebrigmachendes Harz aufweist, vorzugsweise in einem Anteil von mehr als 3 phr.

6. Mehrschichtlaminat nach einem der Ansprüche 1 bis 5, wobei das Sekantenmodul Ms jeder Schicht aus einer Kautschukzusammensetzung zwischen 30 und 150 MPa liegt.

7. Mehrschichtlaminat nach einem der Ansprüche 1 bis 6, wobei das Sekantenmodul Ms jeder Schicht aus einer Kautschukzusammensetzung über 40 MPa, vorzugsweise zwischen 40 und 120 MPa, liegt.

8. Mehrschichtlaminat nach einem der Ansprüche 1 bis 7, wobei die Polymerfolie unabhängig von der in der Folienebene betrachteten Zugrichtung einen Elastizitätsmodul E von über 1000 MPa, vorzugsweise über 2000 MPa, aufweist.

9. Mehrschichtlaminat nach einem der Ansprüche 1 bis 8, wobei die Polymerfolie unabhängig von der in der Folienebene betrachteten Zugrichtung eine mit σₘₐₓ bezeichnete maximale Zugspannung von über 80 MPa, vorzugsweise über 100 MPa, aufweist.

10. Mehrschichtlaminat nach einem der Ansprüche 1 bis 9, wobei das Polymer der Folie ein thermoplastisches Polymer ist.

11. Mehrschichtlaminat nach Anspruch 10, wobei die Folie aus einem thermoplastischen Polymer nach 30 min bei 150°C eine relative Längenverkürzung von unter 5 % aufweist.

12. Mehrschichtlaminat nach einem der Ansprüche 1 bis 11, wobei das thermoplastische Polymer ein Polyester oder ein Polyamid, vorzugsweise ein Polyester, ist.

13. Mehrschichtlaminat nach Anspruch 12, wobei der Polyester ein Polyethylenterephthalat oder ein Polyethylennaphthalat ist.

14. Reifen, der ein Mehrschichtlaminat nach einem der Ansprüche 1 bis 13 aufweist, wobei das Mehrschichtgebilde vorzugsweise den Reifengürtel verstärkt.

15. Reifen nach Anspruch 14, wobei der Reifengürtel aus einem Mehrschichtlaminat nach einem der Ansprüche 1 bis 14 in Verbindung mit in Umfangsrichtung verlaufenden Verstärkungsfäden, die in mindestens einer Kautschukschicht eingebettet sind, besteht.

## Claims

1. Multilayer laminate, usable in particular as reinforcing element for a tyre, comprising at least one polymer film having, whatever the tensile direction considered in the plane of the film, a Young's modulus, denoted E, which is greater than 500 MPa, the said film being placed between and in contact with two layers of rubber composition, **characterized in that** each layer of rubber composition exhibits, in the crosslinked state, a secant modulus in extension at 10% elongation, denoted Ms, which is greater than 30 MPa.

2. Multilayer laminate according to Claim 1, in which the rubber is a diene rubber, preferably selected from the group consisting of polybutadienes, natural rubber, synthetic polyisoprenes, butadiene copolymers, isoprene copolymers and the mixtures of these elastomers.

3. Multilayer laminate according to Claim 2, in which each layer of rubber composition comprises from 50 to 100 phr of natural rubber.

4. Multilayer laminate according to any one of Claims 1 to 3, in which each layer of rubber composition comprises more than 5 phr, preferably between 5 and 30 phr, of a plasticizing agent.

5. Multilayer laminate according to any one of Claims 1 to 4, in which each layer of rubber composition comprises a tackifying resin, preferably at a content of greater than 3 phr.

6. Multilayer laminate according to any one of Claims 1 to 5, in which the secant modulus Ms of each layer of rubber composition is between 30 and 150 MPa.

7. Multilayer laminate according to any one of Claims 1 to 6, in which the secant modulus Ms of each layer of rubber composition is greater than 40 MPa, preferably of between 40 and 120 MPa.

8. Multilayer laminate according to any one of Claims 1 to 7, in which the polymer film exhibits, whatever the tensile direction considered in the plane of the film, a Young's modulus E which is greater than 1000 MPa, preferably greater than 2000 MPa.

9. Multilayer laminate according to any one of Claims 1 to 8, in which the polymer film exhibits, whatever the tensile direction considered in the plane of the film, a maximum tensile stress, denoted σₘₐₓ, which is greater than 80 MPa, preferably greater than 100 MPa.

10. Multilayer laminate according to any one of Claims 1 to 9, in which the polymer film is a thermoplastic polymer.

11. Multilayer laminate according to Claim 10, in which the thermoplastic polymer film exhibits, after 30 min at 150°C, a relative contraction in length which is less than 5%.

12. Multilayer laminate according to any one of Claims 1 to 11, in which the thermoplastic polymer is a polyester or a polyamide, preferably a polyester.

13. Multilayer laminate according to Claim 12, in which the polyester is a polyethylene terephthalate or a polyethylene naphthalate.

14. Tyre comprising a multilayer laminate according to any one of Claims 1 to 13, preferably the multilayer laminate reinforcing the belt of the tyre.

15. Tyre according to Claim 14, the belt of the tyre consisting of a multilayer laminate according to any one of Claims 1 to 13, in combination with circumferential reinforcing threads embedded in at least one rubber layer.
